# EUROPEAN PATENT APPLICATION

(11) **EP 2 530 571 A1**
(43) Date of publication of application: **05.12.2012**
(21) Application number: 11168143.3
(22) Date of filing: 31.05.2011
(51) Int. Cl.: G06F 3/048

(54) **User equipment and method therein for moving an item on an interactive display**

(71) Applicant: Sony Ericsson Mobile Communications AB, 221 88 Lund (SE)
(72) Inventor: Axelsson, Ola, SE-222 41 Lund (SE)
(74) Representative: Valea AB

(57) **Abstract**

Embodiments herein relate to a user equipment (10) for moving an item displayed on an interactive display of the user equipment (10). The user equipment (10) comprises a housing (400), and an interactive display (410) connected to the housing (400) and configured to display at least one item selectable to a user (1).

The user equipment (10) further comprises a positioning circuit (420) connected to the interactive display (410) and configured to detect a first location of a first object and a second location of a second object in relation to the interactive display.

The user equipment (10) further comprises a gesture determining circuit (430) connected to the interactive display (410) and configured to register a first gesture of the first and second object at a first position on the interactive display (410). The first gesture indicates a selection of an item (15) at the first position.

The gesture determining circuit (430) is further configured to register a second gesture of the first and second object at a second position on the interactive display (410). The second gesture indicates a release of an item at the second position, and the interactive display (410) is configured to move the display of the item (15) from the first position on the interactive display (410) to the second position on the interactive display (410 based on the registered first and second gestures.

## Description

### TECHNICAL FIELD

Embodiments herein relate to a user equipment and a method therein. In particular, embodiments herein relate to moving an item displayed on an interactive display of the user equipment.

### BACKGROUND

Many user equipments, such as mobile terminals and lap top computers, do not use a conventional keyboard for data entry or manipulation of applications therein. Instead, user equipments include an interactive display configured to respond to a touch of a finger or a stylus. Thus, a virtual keypad may be presented on the interactive display and a user can type e-mails, phone numbers etc. by activating the virtual letters/numbers thereon. One type of interactive display is a touchscreen. A touchscreen is an electronic display device that can detect the presence and location of a touch within the display area. The term generally refers to touching the display of the device with a finger or hand.

A touchscreen may have two main attributes. First, the touchscreen may enable one to interact directly with what is displayed, rather than indirectly with a cursor controlled by a mouse or touchpad. Secondly, the direct interaction is performed without requiring any intermediate device that would need to be held in the hand, such as a stylus or pen. Such touchscreens can be used in combination with desk top computers, laptops, portable devices, networks, Personal Digital Assistants (PDAs), satellite navigation, video games and the like. Conventional interactive displays are typically implemented using a layer of sensitive material above a display for detection of the finger or stylus.

Using a touchscreen of today, a user who wants to move an item, such as an icon or object, displayed on the screen may press down the finger on the item, hold it down for a while until a vibration is felt in the user equipment. After the vibration the item may be moved around and released at a position by removing the finger from the touchscreen.

### SUMMARY

It is an object of embodiments herein to provide a mechanism that enables items of an interactive display of a user equipment to be moved in an alternate and user friendly manner.

According an aspect the object may be achieved by providing a user equipment for moving an item displayed on an interactive display of the user equipment. The user equipment comprises a housing and an interactive display connected to the housing and configured to display at least one item selectable to a user. The user equipment further comprises a positioning circuit connected to the interactive display and configured to detect a first location of a first object and a second location of a second object indicating a multi touch operation. The user equipment further comprises a gesture determining circuit connected to the interactive display and configured to register a first gesture of the first and second object at a first position on the interactive display. The first gesture indicates a selection of an item at the first position. The gesture determining circuit is further configured to register a second gesture of the first and second object at a second position on the interactive display. The second gesture indicates a release of an item at the second position. The interactive display is configured to move the display of the item from the first position on the interactive display to the second position on the interactive display based on the registered first and second gestures.

According to another aspect the object is achieved by providing a method for moving an item displayed on the interactive display of the user equipment. The interactive display is configured to display at least one item selectable to a user. The method comprises detecting a first location of a first object and a second location of a second object indicating a multi touch operation. The method further comprises registering a first gesture of the first and second object at a first position on the interactive display. The first gesture indicates a selection of an item at the first position. The method also comprises registering a second gesture of the first and second object at a second position on the interactive display. The second gesture indicates a release of the item at the second position. Furthermore, the method comprises moving the display of the item from the first position on the interactive display to the second position on the interactive display based on the registering of the first gesture and the second gesture.

Thus, an alternate way of moving items on a menu screen or similar is provided herein.

### BRIEF DESCRIPTION OF THE DRAWINGS

Embodiments will now be described in more detail in relation to the enclosed drawings, in which:
Fig. 1 is a schematic overview of a user handling a user equipment,
Fig. 2 is a side view depicting a user equipment schematically,
Fig. 3 is a schematic flowchart of a process performed by a user,
Fig. 4 is a block diagram depicting a user equipment, and
Fig. 5 is a schematic flowchart of a method performed in a user equipment.

### DETAILED DESCRIPTION

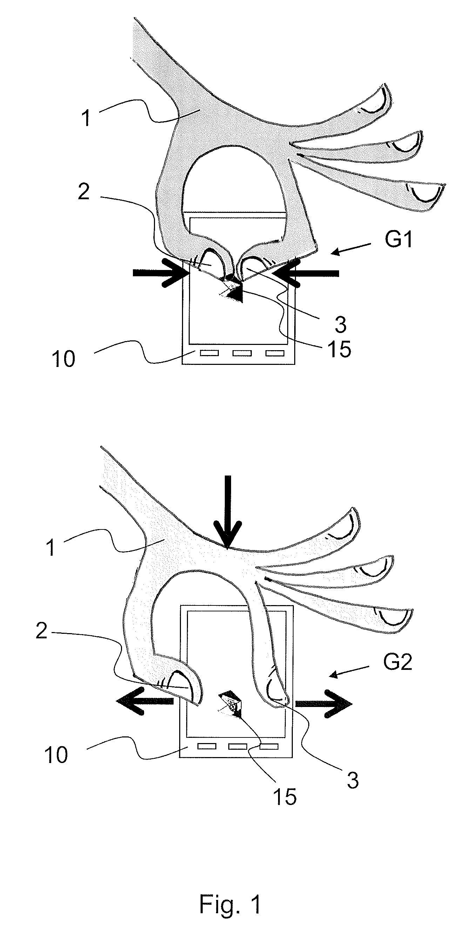

**Fig. 1** is a schematic overview of **a user 1** using **a user equipment 10.** The user equipment 10 is in the illustrated example exemplified as a smart phone but may be any kind of electronic device comprising a touch screen or an arrangement to register location and movement in relation to a display. Such an electronic device may be a mobile phone, a tablet computer, a PDA, a television e.g. a television with a camera arrangement coupled to it such as a gaming camera, a selection display, a touch display or similar.

According to embodiments herein a graphical user interface of the electronic display comprises one or more **items 15**. For example, a graphical menu displayed on an interactive display of the user equipment 10 may comprise a plurality of items, each associated with an application or similar. The item 15 may comprise an icon, an illustration of an object, a thumbnail of a media file, an object in a game, a name/number in a telephone list or similar. The user 1 wants to move the item 15 from a first position to a second position. The item 15 displayed on the user equipment 10 is selected by using **a first gesture G1**, e.g. a pinch gesture around the item 15. The first gesture G1 may comprise movement of two detected objects, **a first object 2** and **a second object 3** such as fingers, styluses, pens, at a first position. The item 15 being located at the first position is then determined to be the selected item. The selected item 15 is then moved along the display and the item 15 is dropped at the desired second position. The selected item 15 is dropped by releasing the selected item using **a second gesture G2**, e.g. a zooming gesture, at the desired position.

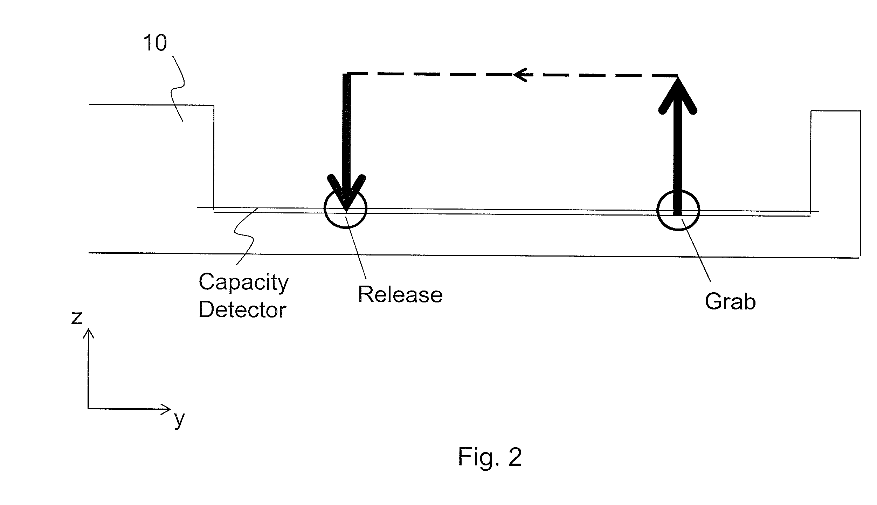

**Fig 2** is a schematic overview of a side view of the user equipment 10. In the illustrated example the interactive display comprises an air-touch arrangement. An air-touch arrangement is a touch sensitive interface that is able to register movement elevating from the interactive display. Thus, the interactive display may register movement at the interactive display by detecting change in locations of the first and second object e.g. fingers, three dimensionally along three axes; an x-axis, a y-axis and a z-axis, and the first gesture G1 is registered when the grab gesture is followed by a movement in the z-axis. The x-axis and y-axis form a surface plane of the interactive display and the z-axis is the normal axis of the surface plane being perpendicular to the surface plane.

The air-touch arrangement may comprise a capacity detection circuit arranged on top of a screen of the interactive display. The capacity detection circuit is able to detect locations up to 2-3 cm from the surface of the interactive display measuring capacity variation over the interactive display. Other examples of air touch arrangements with different ranges of detection from a surface may be camera arrangements such as time of flight cameras, or image analysis based camera setups; multi level optical arrangements, proximity based sensors like IR; or similar arrangements.

The user equipment 10 registers a first location of a first finger 2 and a second location of a second finger 2 e.g. on or in the proximity of the interactive display. These registered locations indicate a multi touch operation, and the user equipment 10 may then get triggered to initiate a detection of gesture in the user equipment 10.

The first and second fingers 2,3 may then grab the item 15. In some embodiments, a number of items may be selected by detecting a number of consecutive so called pinch gestures around a plurality of items.

After the item 15 is grabbed by the user 1 the user equipment 10 may detect that the item 15 is lifted up by detecting that the fingers 2,3 are raised over the interactive display in the z-axis e.g. over a threshold value. The selected item 15 may then be displayed as hovering over the graphical user interface, thus, the selected item may be displayed as being in-front of a menu display by displaying it e.g. 5 % larger with a shadow around the selected item 15.

The first and second fingers 2,3 may then move along the interactive display with the selected item 15 as illustrated with the dashed line in Fig. 2. The user equipment 10 may follow every location of the first and second finger or if the first and second fingers 2,3 are lifted above a maximum lift value the movement of the fingers 2,3 is registered to the locations wherein the first and second fingers re-entry the proximity of the interactive display below the maximum lift value. In some embodiments, when the locations of the first and second finger exceeds the maximum lift value the item 15 is deselected, i.e. reset, and displayed back at its original position. As the different locations are registered the item 15 may be graphically displayed as to hover over the graphical interface when moving along the graphical user interface.

At a second position, the desired drop position, the user equipment 10 detects that the fingers 2,3 stop moving along the surface plane and in some embodiments the user equipment 10 detects that the fingers 2,3 lower down the item 15 to the interactive display. The locations of the first finger 2 and second finger 3 may then perform the second gesture G2 such as a zoom gesture, which second gesture G2 indicates a drop of the item 15.

The item 15 is then moved to the second position from the first position. In some embodiments wherein a plurality of items have been selected all may be dropped with one second gesture. The items may alternatively be released one by one by consecutive second gestures G2s wherein the order of release may be the same order as the items were selected or in the opposite order. Thus, some embodiments herein provide an interactive display that registers a grab gesture of the item 15 and moves the item to a position where the item has been dropped.

It should be noted that in some embodiments the interactive display may comprise a touch arrangement registering movement merely in the surface plane. In these embodiments a grab gesture may be registered on the interactive display, movement is detected along the interactive display, and the item is moved to a position when a release gesture is performed on the interactive display. Such a touch arrangement may comprise a capacity detection circuit, a resistive detection circuit, an optical detection circuit, acoustic detection circuit or the like.

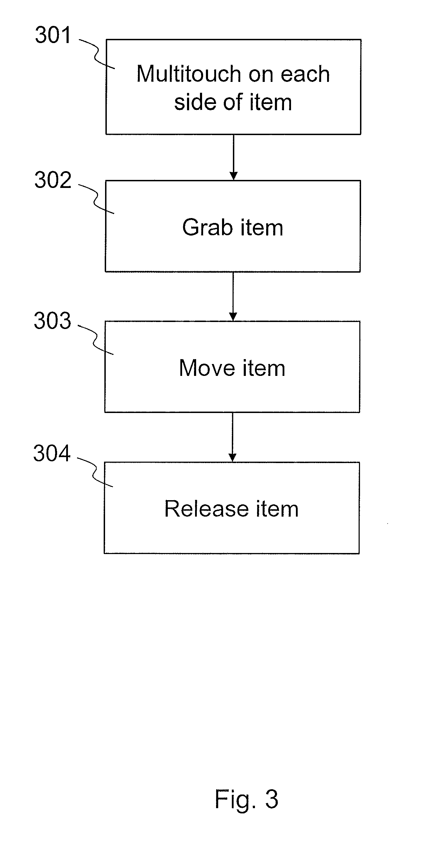

**Fig. 3** is a schematic flowchart of a method of operating a user equipment to move and drop the item 15 in the interactive display.

**Step 301**. The user 1 multi touches the interactive screen by placing the first 2 and second object 3 around the item 15 e.g. on or in the proximity of the graphical user interface. Thus, user equipment 10 may register upon detection of the two objects 2,3 a multi touch operation.

**Step 302.** The user 1 selects the item by performing a first gesture G1, e.g. a grab gesture, towards the item 15. In some embodiments, the user 1 virtually lifts up the selected item 15. The first gesture G1 triggers the scan function in the user equipment 10 to follow the movement on the interactive display.

**Step 303.** The user 1 may then move the first and second objects along the interactive display to the desired position, the second position.

**Step 304.** At this second position, the user 1 releases the item by performing the second gesture G2, e.g. a zooming gesture. This may in some embodiments be performed after the user has lowered the item 15 onto the interactive display.

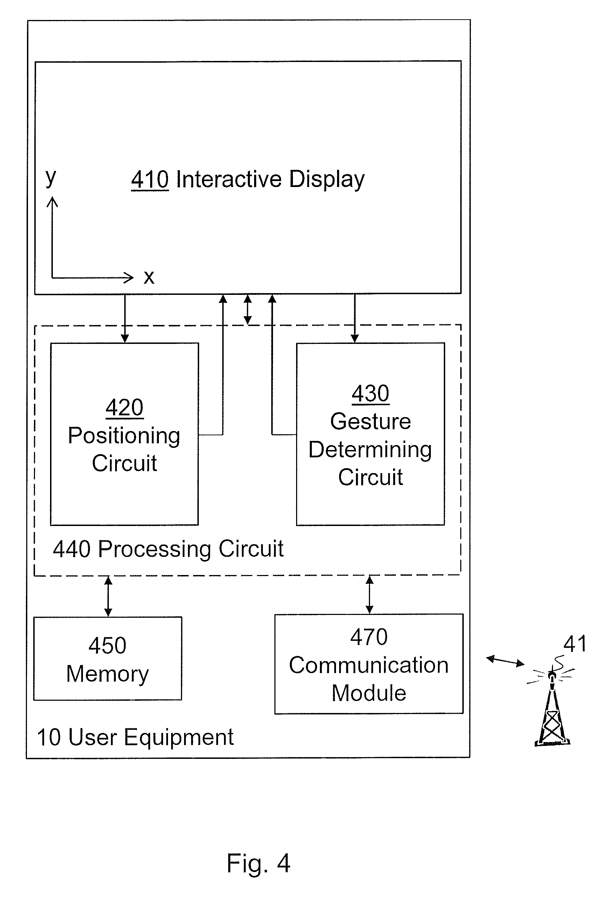

Referring now to **Fig. 4****,** an example of a user equipment 10, such as a mobile phone, a laptop, a PDA, a smart phone, an Internet tablet, a portable video game or the like, for moving an item displayed on an interactive display of the user equipment 10 in accordance with some embodiments herein is illustrated. The user equipment 10 may be a wireless communication terminal such as a mobile radiotelephone forming a part of a radio communication system as illustrated in Fig. 4. The system comprises the user equipment 10 and **a base station transceiver 41**, which is part of a wireless communications network. In some embodiments, the base station transceiver 41 comprises a radio transceiver that defines an individual cell in a cellular network and communicates with the user equipment 10 via an interface and other user equipments in the cell using a radio-link protocol. It should be noted that the arrangement to perform embodiments herein may be arranged in a television comprising a touch screen arrangement such as a camera arrangement.

The user equipment 10 in the illustrated embodiment comprises **a housing 400**, **an interactive display 410** with a user interface e.g. a man machine interface (MMI)) comprising a touch screen function. The interactive display is connected to the housing 400 and configured to display at least one item 15 selectable to the user 1.

The user equipment 10 further comprises **a positioning circuit 420** connected to the interactive display 410 and configured to detect a first location of a first object 2 and a second location of a second object 3. The location may be registered in relation to the interactive display 410.

The positioning circuit 420 may be arranged to detect location of the first object 2 on or in the proximity of the interactive display 410 and a second location of the second object 3 on or in the proximity of the interactive display 410. The first location and second location indicates a multi touch operation. Proximity means herein in a range up to 3 cm above the interactive display 410. In some alternative embodiments, such as a gaming application in a gaming console using a camera to register movement and location, the positioning circuit 420 may be configured to register location and movement up to 3-4 meters.

The user equipment 10 further comprises **a gesture determining circuit 430** connected to the interactive display 410 and configured to register a first gesture G1 of the first and second object 2,3 at a first position on the interactive display 410. The first gesture G1 indicates a selection of an item 15 at the first position.

The positioning circuit 420 is in some embodiments further configured to register movement of the first and second object 2,3 along the interactive display 410. Additionally, the gesture determining circuit 430 is further configured to register a second gesture G2 of the first and second object 2,3 at a second position on the interactive display 410. The second gesture G2 indicates a release of the item 15 at the second position, and the interactive display 410 is configured to move the display of the item 15 from the first position on the interactive display 410 to the second position on the interactive display 410 based on the registered first and second gestures.

In some embodiments, the first gesture G1 may be a grab gesture, which grab gesture comprises that the locations of the first object 2 and second object 3 moves towards one another. The grab movement may be detected in any axes, i.e. the grab may be performed along the x-axis, y-axis or registered along both x-axis and y-axis.

In some embodiments, the positioning circuit 420 may further be configured to detect change in locations of the first object 2 and second object 3 three dimensionally along three axes; an x-axis, a y-axis and a z-axis. The first gesture G1 may be registered when the grab gesture is followed by a movement in the z-axis.

In some embodiments, a number of consecutive first gestures G1 indicate a selection of a plurality of items and the interactive display 410 is configured to move simultaneously the displays of the selected plurality of items.

In some embodiments, the second gesture is a release gesture, wherein the first object and the second object move away from each other.

In some embodiments, the positioning circuit 430 may further be configured to detect change of the locations of the first object 2 and the second object 3 three dimensionally along three axes, an x-axis, a y-axis and a z-axis. The second gesture G2 is then registered when the release gesture follows a movement in the z-axis.

In some embodiments, the interactive display 410 may be represented by an air touch display, wherein the positioning circuit 430 is configured to register movement along the z-axis by detecting change in capacity registered at a capacity sensing arrangement at the interactive display 410.

In some embodiments, the interactive display 410 is configured to display the item 15 in a graphical interface, and to graphically display the item 15 as to follow the movement of the first object 2 and second object 3 after the first gesture G1 is registered. The item 15 is then in some embodiments visualized or graphically displayed as to hover over the graphical interface when moving the item 15, e.g. by enlarging the item and marking it with a shadow around it or similar.

In some embodiments, the interactive display 410 is configured to display the item 15 as enlarged when the second gesture G2 is registered to visually confirm release of the item 15.

In some embodiments, the gesture determining circuit 430 is configured to register the first gesture G1 and the second gesture G2 by comparing movement of locations of the first object 2 and the second object 3 to a movement pattern of two objects stored on the user equipment 10.In some embodiments 10 herein the first gesture G1 and second gesture G2 are stored and used as zoom function gestures in a different graphical interface.

Furthermore, the user equipment 10 may further comprise **a memory 450** and **a communication module 470**. The user equipment 10 may be configured to communicate data with one or more other user equipments over a direct wireless communication interface there between, over another wireless communication interface through one or more cellular base stations. The user equipment 10 may further comprise a speaker, e.g. a sound transducer, to feedback selection acknowledge or sound effect as the item is graphically hovering along e.g. the menu displayed on the interactive display. The user equipment 10 may further comprise some energy source, such as a battery, solar cells, or similar, providing energy to the different circuits.

The interactive display 410 may be any suitable display screen assembly. For example, the interactive display 410 may be a liquid crystal display (LCD) with or without auxiliary lighting e.g., a lighting panel. The user interface may comprise any suitable touch sensitive/activated device and may comprise arrangements to detect position in three axes. A first axis, x-axis, elongates along one side of the interactive display, and a second axis, y-axis, elongates along a different side of the interactive display; the y-axis being substantially perpendicular to the x-axis. The third axis, z-axis, elongates away from the surface formed by the x-axis and the y axis, also known as surface plane. Thus, the z-axis elongate along the normal of the surface plane.

The embodiments herein for moving the item 15 in the interactive display 410 may be implemented through one or more processors, such as **a processing circuit 440** in the user equipment 10 depicted in Fig. 4, together with computer program code for performing the functions and/or method steps of the embodiments herein. The program code mentioned above may also be provided as a computer program product, for instance in the form of a data carrier carrying computer program code for performing embodiments herein when being loaded into the user equipment 10. One such carrier may be in the form of a CD ROM disc. It is however feasible with other data carriers such as a memory stick. The computer program code may furthermore be provided as pure program code on a server and downloaded to the user equipment 10.

The memory 450 may be configured to store digital information signals and data such as digital data and applications thereon. The memory 450 may comprise one or more memory units and may be used to store e.g. data such as gesture patterns, and applications to perform the methods herein when being executed on user equipment 10 or similar.

The communication module 470 may be configured to communicate data over one or more wireless interfaces to another remote wireless terminal. The communication module 470 may e.g. be represented by a cellular communication module, a direct point-to-point connection module, and/or a WLAN module. With a cellular communication module, the user equipment 10 may communicate via a base station of the radio communications network using one or more cellular communication protocols such as, for example, Advanced Mobile Phone Service (AMPS), ANSI-136, Global Standard for Mobile (GSM) communication, General Packet Radio Service (GPRS), enhanced data rates for GSM evolution (EDGE), code division multiple access (CDMA), wideband-CDMA, CDMA2000, Universal Mobile Telecommunications System (UMTS), Long Term Evolution (LTE), LTE-Advanced, Worldwide Interoperability for Microwave Access (WiMax), or Ultra Mobile Broadband (UMB), just to mention a few possible implementations. The base station may in its turn be connected to a core network of the radio communications network. A direct point-to-point connection module may comprise a direct Radio Frequency (RF) communication module or a direct Infra-Red (IR) communication module. The direct RF communication module may include a Bluetooth module. With a Bluetooth module, the user equipment 10 may communicate via an adhoc network through a direct point-to-point interface. With a WLAN module, the wireless terminal 10 can communicate through a WLAN using a communication protocol that may include, but is not limited to, 802.11 a, 802.11 b, 802.11 e, 802.11 g, and/or 802.11i.

According to some embodiments, the user equipment 10 is a handheld mobile terminal. By "handheld mobile terminal," it is meant that the outer dimensions of the mobile terminal are adapted and suitable for use by a typical operator using one hand. According to some embodiments, the total volume of the handheld mobile terminal 10 is less than about 200 cc and may further be less than about 100 cc. According to some embodiments, the total volume of the handheld mobile terminal 10 is between about 50 and 100 cc. According to some embodiments, no dimension of the handheld mobile terminal 10 exceeds about 200 mm.

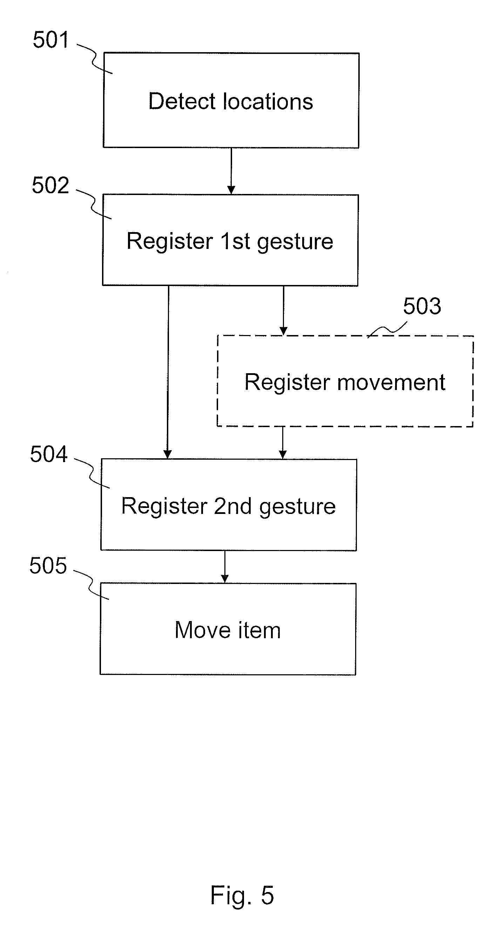

**Fig. 5** is a schematic flow chart of a method for moving an item displayed on an interactive display 410 of a user equipment 10. The interactive display 410 is configured to display at least one item 15 selectable to the user 1. The steps do not have to be taken in the order stated below, but may be taken in any suitable order.

**Step 501**. The user equipment 10 detects a first location of a first object 2 and a second location of a second object 3 in relation to the interactive display. In some examples, such as an interactive display on a portable equipment, the user equipment 10 detects the first location of the first object 2 on or in the proximity of the interactive display 410 and the second location of the second object 3 on or in the proximity of the interactive display 410, thus, indicating a multi touch operation. The locations of the objects 2,3 are related to positions on the interactive display 410.

**Step 502**. The user equipment 10 registers a first gesture G1 of the first object 2 and the second object 3 at a first position on the interactive display 410. The first gesture G1 indicates a selection of an item 15 at the first position. The first gesture G1 may be a grab gesture, which grab gesture comprises that the locations of the first object 2 and second object 3 move towards one another, also called a pinch gesture. The first gesture G1 may alternatively be a vertically movement away from the item 15, e.g. a lift movement.

**Step 503**. The user equipment 10 may in some embodiments, as indicated by the dashed line, register movement of locations of the first object 2 and second object 3 along the interactive display 410. For example, the user equipment 10 may register movement by detecting change in locations of the first object 2 and the second object 3 three dimensionally along three axes; an x-axis, a y-axis and a z-axis. The first gesture G1 is registered when the grab gesture is followed by a movement in the z-axis.

In some embodiments, a scan function may be triggered after the first gesture G1 is registered. The scan function comprises to detect movement, e.g. changing positions, along the interactive display 410.

**Step 504**. The user equipment 10 registers a second gesture G2 of the first object 2 and the second object 3 at a second position of the interactive display 410. The second gesture G2 indicates a release of the item 15 at the second position. The second gesture G2 may be a release gesture, wherein the first object 2 and the second object 3 move away from each other. Alternatively, the second gesture G2 may be a vertical movement towards the second position, such as a gesture that one would put down the item on the interactive display 410. The user equipment 10 may register movement by detecting change of the locations of the first object 2 and the second object 3 three dimensionally along three axes; an x-axis, a y-axis and a z-axis. The second gesture G2 may be registered when the release gesture follows a movement in the z-axis.

The displayed item 15 may be enlarged when the second gesture (G2) is registered to visually confirm release of the item 15.

**Step 505**. The user equipment 10 moves the display or visualization of the item 15 from the first position on the interactive display 410 to the second position on the interactive display 410 based on the *registering* 502,504 of the first gesture G1 and of the second gesture G2. For example, the item 15 may be comprised in a graphical interface, such as a menu structure, and the item 15 is graphically displayed as to follow the movement of the first object 2 and the second object 3 after the first gesture G1 is registered. Thus, the item 15 may move simultaneously as the locations of the first object 2 and the second object 3 changes. The item 15 may further be graphically displayed as to hover over the graphical interface when moving the item 15. The movement may alternatively be performed upon detection of the second gesture G2.

The interactive display 410 may be represented by an air touch display. The, air touch display may be based on detection of capacity changes or other readings capable of detecting movement along three axes. The movement along the z-axis may thus be detected by detecting change in capacity registered at a capacity sensing arrangement at the interactive display 410.

In addition or alternatively, the user equipment 10 may register a number of consecutive first gestures that indicate a selection of a plurality of items and that the displays/icons/images of the selected plurality of items are moved simultaneously. The plurality of items may then be released by a number of consecutive second gestures. The plurality of items may be released in the order the items were grabbed or in the opposite order.

The first gesture G1 and the second gesture G2 may be registered by comparing movement of locations of the first object 2 and the second object 3 to a movement pattern of two objects stored on the user equipment 10. For example, the movement pattern of a pinch gesture and a movement pattern of a zoom gesture are stored at the user equipment 10. When the user equipment 10 registers a zoom gesture, a zoom function may be triggered in a different graphical interface, e.g. when an image application, a map application, or an internet browser application is running. However, if this zoom gesture is performed when being in a menu structure or a media player application interface, the icon or song is released in a movement process.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the invention being defined by the following claims.

## Claims

1. A user equipment (10) for moving an item displayed on an interactive display of the user equipment (10), which user equipment (10) comprises:
a housing (400);
an interactive display (410) connected to the housing (400) and configured to display at least one item (15) selectable to a user (1),
a positioning circuit (420) connected to the interactive display (410) and configured to detect a first location of a first object (2) and a second location of a second object (3) in relation to the interactive display (410);
a gesture determining circuit (430) connected to the interactive display (410) and configured to register a first gesture (G1) of the first and second object at a first position on the interactive display (410), which first gesture (G1) indicates a selection of an item (15) at the first position,
wherein the gesture determining circuit (430) is further configured to register a second gesture (G2) of the first and second object at a second position on the interactive display (410), which second gesture (G2) indicates a release of an item at the second position, and the interactive display (410) is configured to move the display of the item (15) from the first position on the interactive display (410) to the second position on the interactive display (410) based on the registered first and second gestures.'

2. A user equipment (10) according to claim 1, wherein the positioning circuit (420) is further configured to register movement of the first object (2) and the second object (3) along the interactive display (410).

3. A user equipment (10) according to any of claims 1-2, wherein the positioning circuit is configured to detected the first location of the first object (2) on or in the proximity of the interactive display (410) and the second location of the second object (3) on or in the proximity of the interactive display (410) indicating a multi touch operation.

4. A user equipment (10) according to any of claims 1-3, wherein the first gesture (G1) is a grab gesture, which grab gesture comprises that the locations of the first object (2) and the second object (3) move towards one another.

5. A user equipment (10) according to claim 4, wherein the positioning circuit (420) is further configured to detect change in locations of the first object (2) and the second object (3) three dimensionally along three axes; an x-axis, a y-axis and a z-axis, and the first gesture (G1) is registered when the grab gesture is followed by a movement in the z-axis.

6. A user equipment (10) according to any of claims 1-5, wherein a number of consecutive first gestures (G1) indicate a selection of a plurality of items and the interactive display (410) is configured to move simultaneously the displays of the selected plurality of items.

7. A user equipment (10) according to any of claims 1-6, wherein the second gesture (G2) is a release gesture, wherein the first object (2) and the second object (3) move away from each other.

8. A user equipment (10) according to claim 7, wherein the positioning circuit (430) is further configured to detect change of the locations of the first object (2) and the second object (3) three dimensionally along three axes, an x-axis, a y-axis and a z-axis, and the second gesture (G2) is registered when the release gesture follows a movement in the z-axis.

9. A user equipment (10) according to any of claims 5-8, wherein the interactive display is represented by an air touch display, wherein the positioning circuit (430) is configured to register movement along the z-axis by detecting change in capacity registered at a capacity sensing arrangement at the interactive display.

10. A user equipment (10) according to any of the claims 1-9, wherein the interactive display (410) is configured to display the item (15) in a graphical interface, and to graphically display the item (15) as to follow the movement of the first object (2) and the second object (3) after the first gesture (G1) is registered, which item (15) is then visualized or graphically displayed as to hover over the graphical interface when moving the item (15).

11. A user equipment (10) according to any of the claims 1-10, wherein the interactive display (410) is configured to display the item (15) as enlarged when the second gesture (G2) is registered to visually confirm release of the item (15).

12. A user equipment (10) according to any of claims 1-11, wherein gesture determining circuit (430) is configured to register the first gesture (G1) and the second gesture (G2) by comparing movement of locations of the first object (2) and the second object (3) to a movement pattern of two objects stored on the user equipment (10).

13. A user equipment (10) according to any of claims 1-12, further comprising a memory (450) configured to store the first gesture (G1) and the second gesture (G2), which are used as zoom gestures in a different graphical interface.

14. A method for moving an item displayed on an interactive display (410) of a user equipment (10), which interactive display (410) is configured to display at least one item (15) selectable to a user, the method comprises:
*detecting* (501) a first location of a first object (2) and a second location of a second object (3) in relation to the interactive display (410);
*registering* (502) a first gesture of the first object (2) and the second object (3) at a first position on the interactive display (410), which first gesture (G1) indicates a selection of an item (15) at the first position,
*registering* (504) a second gesture (G2) of the first object (2) and the second object (3) at a second position on the interactive display (410), which second gesture (G2) indicates a release of the item (15) at the second position, and
*moving* (505) the display of the item (15) from the first position on the interactive display (410) to the second position on the interactive display (410) based on the *registering* (502,504) of the first gesture (G1) and of the second gesture (G2).

15. A method according claim 14, wherein the first gesture (G1) comprises a grab gesture, which grab gesture comprises that the locations of the first object (2) and the second object (3) move towards one another, and wherein the second gesture (G2) is a release gesture, wherein the first object (2) and the second object (3) move away from each other.
